# EUROPEAN PATENT APPLICATION

(11) **EP 3 255 214 A1**
(43) Date of publication of application: **13.12.2017**
(21) Application number: 16746165.6
(22) Date of filing: 02.02.2016
(51) Int. Cl.: E02F 3/76, E02F 3/96

(54) **TRAILING MACHINE FOR THE LEVELLING OF GROUND AND ROADS**

(30) Priority: 02.02.2015 ES 201530109 U
(71) Applicant: Villalba Hernández, Daniel, 50009 Zaragoza (ES)
(72) Inventor: Villalba Hernández, Daniel, 50009 Zaragoza (ES)
(74) Representative: Sahuquillo Huerta, Jesús
(86) International application number: PCT/ES2016/070060
(87) International publication number: WO 2016/124804

(57) **Abstract**

The invention relates to a towable machine (100) for leveling ground and roads which can be towed by a tractor (200) or tractor unit, comprising a chassis (1) attached to the tractor unit (200), wherein said chassis (1) supports a scarifier-type front portion (5) that directs the scarified material towards a leveling blade (6), said material accumulating in a container (20, 21) demarcated by side walls (7), and wherein the scarifier-type front portion (5) is formed by three scarifier-type blades (5a, 5b, 5c) which are curved and arranged in a delta shape with respect to the forward movement direction and bearing interchangeable spikes or tines at the lower end thereof.

## Description

The object of the present invention relates to a towable machine for ground leveling and road maintenance which, towed by an agricultural tractor, small gardening tractor, truck or other type of tractor unit, allows carrying out a method of leveling the ground, fixing pot-holes and conserving roads, boundaries, banks, ditches and spaces with plants.

Another object of the invention relates to a modular machine featuring a rock breaking unit for breaking up the rocks located on the surface, and it also allows mixing the existing plot of land with additives improving soil carrying capacity and cohesion, as well as a compactor roller, a side cultivator for forming ditches, a side coulter and a trimmer mounted on the central front portion and on one side. In another object of the invention, the invention can incorporate a water wagon.

The present invention is simple, robust and compact, and can be handled by unskilled laborers in public works jobs, solving all dirt road maintenance needs by itself.

### State of the Art

Different machines conceived for other jobs but used for opening up, repairing and maintaining dirt or gravel aggregate roads are known. This machinery is divided into different types, as described below.

Front bucket loaders and front dozer blades are mounted on a tractor vehicle, for example a bulldozer. Machines of this type have the drawback of not defining a grade of uniform and precise horizontal finish for the driving surface, where the production thereof is minimal compared with the power used.

Leveling blades driven by an agricultural tractor with wheels behind the coulter may in some cases laterally level them out in order to adjust the cross level of the road, as in ES1073834U, ES1060720U, ES1060721U and ES1060722U. In this case, the blades have scarce penetration capacity and very few possibilities of performing precise work.

Another known type are rear dozer blades rear driven by an agricultural tractor, suspended from a fixed container in both the forward and backward direction of travel, having the same limitations as the previously described machines. Rear dozer blades driven by an agricultural tractor, but which can be angled and moved hydraulically, in some cases allow working in an off-centered manner, being able to clear weeds and debris existing on the sides of the road.

Rear leveling blades driven by an agricultural tractor and controlled by a laser system are only suitable for leveling tasks and currently cannot be used on hard and rocky soils.

Self-propelled motor graders are high-precision and hard-to-handle machines. These machines are particularly conceived for finishing, defining and grading work on surfaces composed of weak and loose materials. They cannot simultaneously perform more than one function at a time. They require the driver to be highly skilled and feature complex hydraulic and power transmission systems, lack the possibility of being able to spray, mix and add compounds improving the characteristics of the ground, to compact the soil, crush rocks or cut or destroy rock formations or forest cover. Furthermore, the continued use in extreme conditions on hard materials, given that the leveling blade is supported on a large number of movable parts and articulations, maladjustments rapidly set in and generate costly repairs, while at the same time bringing about an early end of the useful life of the self-driven motor grader, since it is not designed for these tasks. In any case, these are expensive machines with a relatively poor performance.

The machines described above lack the ability to penetrate hard or very hard soils such as those existing on the roads used for agricultural purposes. Examples of machines of this type can be found in prior art documents AR087358A1, GB1255959A, US5289880A, US6904979B1, US7017288B1 and US8079425B1.

In addition, compactor rollers can be ballasted or vibrating, but they are only used for trampling and compacting. They are intended and built according to general compacting needs, either being very thick for supplying material in thick layers (and in this case vibrating rollers will be used) or having large surfaces for crushing rocks appearing in the cultivated fields, and in this case they are very wide, i.e., from 7 to 10 meters, where the load per running meter is very low.

Cultivators that can break stones on the surface or destroy forest cover are highly robust and very heavy machines given that work with extremely thick material designed solely for this purpose.

Trimmers intended for a picking and shredding weeds and plant debris of various types are machines which have been designed up until now for specific purposes, such as shredding plant debris on the surface left over from previous crops, or for clearing between tree groves or for removing trees from uncultivated lands, but they were never designed to simultaneously trim the strip of plant material growing between the two carriageways in a seldom-used road and the side thereof close to the edge of the road, such as those commonly found seldom-used mountain roads such as those in hunting reserves, forests under common ownership or natural parks, and they have never been associated with a grader.

Weed-killing machines are very well known for a number of specific weed treatment and control purposes, but they have never been associated with any type of grader.

Self-propelled or suspended soil stabilizers with additive mixers are specific machines which require first leveling, then spraying and finally compacting the soil. They usually have another machine associated therewith which supplies and distributes the additives to be mixed, whether they are solid additives, lime or cement, i.e., a towable or self-propelled metering tank, or a water wagon if they are diluted polymers. This method of spreading out solid cohesionless materials, when done with a tank that spreads out the additive and is subsequently mixed with a stabilizer, generates a great deal of airborne dust due to the occasional effect of the wind, often times being above the legally established limits. Likewise, if stabilizing is done by means of mixing polymers or co-polymers diluted in water which are then mixed with the soil, there is a common practice of spraying the ground with this solution, and once it has been sprayed, mixing it with the stabilizer. However, from the time this solution touches the ground, it starts to dry up and the setting reaction commences, so the more time that passes, the less effective this stabilizing method using a polymer solution will be.

Patent document WO2014202813A1 describes a method for stabilizing a plot of land, such as, for example, stabilizing the surface of a plot of land, comprising the steps of depositing a layer of inert material (which can be lime or cement) on the surface of the plot of land to be treated; applying a liquid stabilizing substance normally on a synthetic polymer on the layer of inert material; and turning over the section of the plot of land at a variable depth including the layer of inert material and the liquid stabilizing substance and raising it and turning it over with respect to the level of the ground where it is simultaneously mixed, thereby assuring correct mixing of the earth with the additives, and at a suitable depth. This method is carried out by means of a motor-driven rolling assembly. Nevertheless, this patent document does not describe a ground leveling system or a side arm for bearing a coulter capable of forming banks and ditches, much less one with dual articulations. Nor does it describe the possibility of a forward and backward height adjustment at the driver's will, trimming and finally compacting the plot of land that has been mixed with the additive. This patent document describes how to meter, transport and mix, but it provides no possibility of leveling, providing slopes and banks, scraping if the plot of land is hard, and then compacting the surface both by means of tires and the action of a vibrating roller, all of which is integrated in a vehicle with front-end and back-end articulations.

Water wagons for wetting the layer of soil to be compacted are arranged on a truck or driven by an agricultural tractor, which solely and exclusively perform this function; there is no water wagon associated with graders or stabilizers, or compactors, as it is a machine designed for a sole purpose.

Therefore there is a deficiency in leveling small surfaces such as gardens, parks, walkways or bicycle lanes in a precise and mechanized manner with the same degree of precision as in those used on larger surfaces.

Nevertheless, the various patent documents described in the state of the art lack the features described in the present invention. Generally, each of the machines described above was designed for a particular and specific purpose, but they were not designed to be used to solve road repair and maintenance problems with all the operational needs required for such purpose.

### Description of the Invention

The present invention solves the problems described in the state of the art. More specifically, the present invention relates to a towable machine, having a modular, simple, robust and multipurpose design, based on a leveling central body (LCB) constituting the base element of the invention, to which there are added different specific attachments, constituting different particular embodiments of the machine object of the present invention, such that all the required maintenance jobs for any road can be completed.

The maintenance jobs are performed by means of the machine of the invention towed by a tractor or tractor unit of any type, in a non-limiting manner, a bucket loader, telescopic manipulator, bulldozer, or tracked bucket loader, civil or military trucks or a small lawn mowing gardening tractor. One object of the invention is for the machine to be easy to handle and for it to prevent workers in charge of maintenance from having to be specialists or at least trained in public works jobs, with the operational advantage this entails.

Objects of the invention include leveling, fixing potholes, repairing and maintaining of dirt road or gravel aggregate roads and even roads with rock formations on the surface which have degraded due to exposure to weathering, as well as doing the side-sloping finishing work (such as banks inclined with respect to the road or ditches) to help rainwater drain off the sides.

In a particular embodiment of the invention, the machine comprises articulation means both in the front and in the rear shaft, controlled by hydraulic cylinders making the machine of the invention highly maneuverable and allowing it to effectively adapt to roads that are winding and have obstacles which must naturally be avoided. Furthermore, it allows longitudinal and transverse leveling in urban roads, parks, gardens and recreational areas in which pedestrians and cyclists move about, and it could be smaller and towed by tractor-mounted reapers starting at a power of 12CV.

In a particular embodiment, the present invention allows simultaneously leveling and forming roads, spraying and wetting the plot of land before and after leveling such that the dust generated during this process is eliminated and the dirt and gravel adhere more firmly. Likewise, chemical compounds could be mixed in the leveling pass, in the existing ground, onto the wearing course such that said course becomes firmer and more durable.

For better road conservation and cleanup, an object of the present invention relates to trimming the central section of the road and on the right side, where herbicides may be applied simultaneously by means of fumigation equipment during the leveling and spraying process.

An object of the invention relates to laying out borrow materials, natural soils, clays or gravel aggregates, or leveling agricultural fields for subsequent gravity irrigation associating it with an automated laser emitter-receiver system. In this particular case, the leveling central body (LCB) will have two side extensions associated therewith to make it wider (virtually twice as wide, half on each side), that will fold over leveling central body by means of the action of two hydraulic cylinders to allow traveling on public thoroughfares when going from one farm to another.

More specifically, the machine object of the invention is formed by a main structure hereinafter referred to as leveling central body (hereinafter LCB) which is made up of:
a) a plurality of interchangeable scarifier-type front spikes located in three sections in the front portion of the body of the machine and which only turn over the high points, whether they are hard or very hard, without lifting up large blocks of rock, thereby providing fine material suitable for leveling the wearing course.
b) A rear coulter driving the material turned over by the front tines for being deposited in wells, pits or areas where it is needed.
c) Two side blades (one on each side), with interchangeable closing runners which, together with the scarifier-type front spikes and the rear coulter, form a container open in the front and enclosed on the sides and in the back in the direction of travel, where the dirt or fine materials are driven in order to be deposited in the pits, without spilling over the sides.

In a particular embodiment, three elements could be housed inside this leveling central body LCB, although not all three at the same time:
a) Optional intermediate floating coulter driving a small amount of moved material so that said material will fall into potholes, cause the coarse materials to settle and subsequently be passed over again by the rear coulter. The efficacy and correct settling of medium-sized stones in potholes is thereby increased, said stones being optimally mixed with fine materials and the material supplied in the potholes solidifies better. It is secured with chains in the front and overhead, can be hydraulically lifted at the driver's will when said driver considers it appropriate. This intermediate floating coulter may also be associated with a line of of spikes in the front portion for driving stones between said spikes, and the stones more readily fall and settle into the depressions and potholes, allowing fine materials to get out so that they can be made to settle using the intermediate coulter, therefore being even more effective.
b) Optional V-shaped rakes arranged in a floating position and converging in the center, driving to that region medium-sized stones that were moved by the front tines. These stones driven by the V-shaped rakes are broken up by the crushing mill, located in the central rear portion thereof and moved by the power take-off of the tractor, and then converts them into fine gravel (less than 30 mm in diameter) falling into the leveling container and settling on the ground, which is very useful for improving the wearing course. They are located between the scarifier-type front spikes and the rear coulter and cannot be used at the same time as the intermediate floating coulter. The assembly formed by the V-shaped rakes and the crushing mill is particularly designed to be attached to one another through a chassis and to be located in the center of the LCB, but in another option they could be mounted behind the rear shaft provided that the machine is not towing the cultivator-mixer, being incompatible with same.
c) Optional five-spike scarifier that serves for turning over the subsoil of the road at a depth of 20 to 30 centimeters, hydraulically operated upwards and downwards at the driver's will. This scarifier is primarily used for digging up the plot of land before being cultivated and before solid or liquid aggregates are added to be stabilized. Therefore, when the cultivating-mixing unit is used, one can be certain that there will not be any solid formation complicating the work, and the work will therefore be done faster.
   a. In the specific use of the grader-additive mixer assembly, the scarifier will be located inside the leveling central body, immediately after the scarifier-type front spikes and in front of the rear coulter. Use thereof at the same time as the intermediate floating coulter or the associated assembly of the V-shaped rakes and the crushing mill is incompatible.
   b. If the five-spike scarifier was integrated in a grader solely designed for leveling roads, its mounting location could be behind the shaft of the grader.
   c. If the five-spike scarifier was integrated in a grader with a large reservoir, its mounting location would be behind the shaft of the reservoir.

In a particular embodiment, the following elements could be incorporated above or on the sides of this leveling central body (LCB):
a) Optional side extensions to increase the width of the grader machine by about one meter on each side and to use the grader as an automated leveling bucket controlled by a laser emitter-receiver device for the reparation of plots of land for subsequent irrigation.
b) An optional cultivating arm for ditches in hard soils, located on the left side of the machine; its articulations are hydraulically controlled, cultivating hard or very hard materials for forming ditches.
c) Optional hydraulically controlled side coulter pivoting about two shafts in the longitudinal direction with respect to the direction of travel and one in the vertical direction and perpendicular to the ground, thereby being able to change the angles of incidence with the ground with respect to the three shafts.

In a particular embodiment, said side coulter could have bolt-mountable extensions mounted thereon for greater reach or for bearing a hydraulically articulated extension, referred to as an articulated extension which forms larger banks or V-type ditches.

In a particular embodiment, said coulter could incorporate herbicide fumigation equipment, consisting of a small reservoir integrated in any high area of the machine (depending on the version), a pump with a pressure limiting valve driven by the cardan shaft, a flow valve and one or more metering nozzles. It will be used to apply herbicide to the right of the machine for conservation and cleanup instead to the right of the machine.

In an optional and non-limiting version, this side coulter could be associated in the front portion thereof with a front trimming arm cutting and shooting out the plant debris located along the outer edge of the road, clearing from the wearing course any plant debris found on the border that hinders leveling when mixed with the aggregate. Said trimming arm pivots hydraulically in inclination, height and alignment with respect to the coulter of the side arm and has a disc to which there are attached several cutting and crushing chains or coulters and which rotates outwardly and in the direction of rotation more or less parallel to the plane of the ground to which it is proximal. It is adjustable from the driver's cab and is moved by a hydraulic motor located in the upper portion thereof. It is floating and adapts to the ground by means of a lower plate rotating freely above the ground. Since it is associated with the side arm, when the side arm moves upwards the trimming arm moves upward as well.

In an optional and non-limiting version, said coulter could be associated with a ditch compacting-forming polymer mixing arm, which is associated with and bolt-mounted to the hydraulically operated right side arm.

This cultivator unit consists of three parts performing three different functions:
a) Cultivating unit or cultivating wheel: this part will have the shape that is to finally be imparted to the ditch. The ditch is sprayed with polymers in solution with water, and the cultivating unit has spikes turning over the ditch (surface where the ditch is going to be formed) to efficiently mix the additives with the soil due to the rotational action imparted in the cultivating wheel by the hydraulic gear motor assembly. There are several bolt-mountable cultivator wheels (there can be as many wheels as there are grades to be defined), mixers, pre-formers, etc. This cultivating unit is bolt-mounted to the hydraulic gear motor.
b) Scraping-forming runner: after that, and integrally attached to the same chassis as the cultivating unit (cultivating wheel), there is attached an interchangeable scraping-forming runner and it will be located at the same height at which the cultivating wheel has passed and will impart the final grade to the ditch.
c) Compacting wheel behind the cultivating wheel and the scraping-forming runner, there is a second chassis articulated to the main chassis which can be bolt-mounted to the side coulter bearing the compacting wheel. This compacting wheel has an eccentric mass which produces the vibration needed for compaction when rotated by means of a small hydraulic motor. The height of this compacting wheel with respect to the cultivating wheel and the scraping-forming runner is adjusted by means of a hydraulic cylinder which adjusts the angle of the second chassis with respect to the chassis which can be bolt-mounted to the side coulter. Said hydraulic cylinder will be associated with a vibration-absorbing nitrogen accumulator which can exert the desired pressure on the ground. In a particular version, this accumulator could be replaced with a spring carrying out said function in a similar manner.

In a particular embodiment, this leveling central body (LCB) could incorporate the following elements in the front portion:
a) A front hitch which is a part in the form of a truncated pyramid connecting the LCB to the tractor. It can be bolted or attached by means of welding, forming by itself a single body, and the front point allows rotation so that the tractor unit can swing on a different plane with respect to the grader. It connects the tractor to the hydraulic lifting bars, thereby controlling the height of the scarifier-type spikes in front of the LCB with respect to the ground.
b) A hydraulic front hitch which is attached to the tractor or tractor unit (to the swinging hitch) and the LCB by means of a horizontal articulation perpendicular to the direction of travel. The hitch angle with the LCB, and therefore the height of the front spikes from the ground, is controlled with the front hydraulic lifting cylinder.
c) Additionally, a hydraulically actuated hydraulic front steering hitch which will be mounted on a vertical axis with respect to the ground and will be hydraulically operated to rotate left or right. It serves to align the machine in the front portion with respect to the direction of travel, making it more maneuverable. The lifting cylinder supported by the machine in the front portion acts on the hitch.
d) In an additional and modular manner, a central and side modular trimmer which consists of two modules, i.e., a central module and another side module mounted on a chassis swinging 120°. Its purpose is to shred the grass and weeds located in the center and on the side of seldom-used roads which damage the lower or side portion of vehicles traveling on the road. Said trimmer in the floating position adapts to the ground by means of a rear roller which serves as a support for the trimmer with respect to the ground so that it can adapt to the preset height, the central section is attached to the side section by an articulated arm on two axes in the horizontal direction and with respect to the direction of travel, said arm being telescopic in order to slightly adjust the reach of this arm. It can be bolt-mounted to the front hydraulic hitch of the grader. This embodiment and the embodiment with the rear cultivator-mixer, or a grader associated with a large tank, cannot be used simultaneously. The trimmer that rotates outwards and can be adjusted on three axes cannot be used simultaneously either.

In a particular interpretation, and for specific jobs, the leveling central body could be associated with a large tank in the front lower portion with the implements that can be associated with it, in an optional and additional manner.

This reservoir could be divided into several compartments for water, herbicides or diluted ligand additives.

Water is stored in the largest compartment, and the liquid additive (polymer or co-polymer) or the herbicide mixed with water are kept in the other smaller compartments. Leveling jobs could therefore be done at the same time as spraying water or liquid additives on the surface, which will make the road firmer and eliminate dust. Just water could be used in order to slightly wet the ground beforehand so that once the grader has passed over, a final sealing spray is performed which will eliminate the dust generated by the grader and the dirt or gravel will be supplied in the pothole, rapidly taking on a high degree of compaction and firmly adhering to other areas of the road which are solidly blended. The addition of chemical compounds diluted in water, which will be poured into the area in which they are needed (potholes) and continuously over the material inside the leveling container so that this material is compacted and adheres to the potholes, is performed, thereby making the driving surface of the road firmer and eliminating dust. Likewise, the addition of herbicides diluted in water could also be performed for applying them on the edges of the road.

This large reservoir in the rear portion could optionally have a liftable hitch for suspending a vibrating or non-vibrating compactor roller, or a cultivating-additive mixing unit, with the corresponding metering systems. In this case and for this purpose, there will be a shaft articulated by cardan-type constant-velocity joints from the tractor giving it power.

In a particular embodiment, said hydraulically liftable hitch will be mounted on an articulated support (by means of a hydraulic cylinder) with respect to the longitudinal axis of the machine to make the assembly formed by the grader with the integrated reservoir and implements suspended in the rear portion thereof more maneuverable.

This particular vehicle could be articulated in the front portion by a hydraulically operated gooseneck-type arm for making it more maneuverable, where the tank load depressor will be mounted.

The leveling central body which is mounted on the front lower portion of the tank will be attached to said front lower portion by means of six ties, four of which drive it, being aligned with the direction of travel, and two of which are transverse to it for guiding the alignment. Lifting will be done by three vertical ties located one in the front and in the center of the leveling central body, (as there could be two) and the two remaining ties in the rear portion (one to the left and the other to the right). They will all be attached by articulations and cams that will be finally be attached to a single piston which will be actuated to move the leveling central body up and down. Likewise, the front tie and one of the rear ties will be a hydraulic telescopic tie, such that by changing the length in the front, for example, the front portion of the leveling central body moves upwards more or less, and when the one in the rear is elongated or contracted, it changes the lateral inclination of the leveling central body, and when the main hydraulic cylinder is operated, the main leveling central body does everything at the same degree of inclination.

Another object of the invention relates to associating the leveling central body with a smooth, vibrating or non-vibrating roller, or a roller of the type known as a pad foot roller, compacting the surface by crushing and breaking up rocks found in it. If the roller is a pad foot roller, layer after layer is compacted and said layers firmly attach to one other, obtaining a hermetic seal when the materials are plastic, for example, clays in the construction of dikes or dams. This roller is mounted behind the LCB and in front of the rear shaft, although in some options it could also be mounted behind the rear shaft.

In a particular embodiment, the machine incorporates a cultivator-mixer unit, where the cultivator can descend slightly from the horizontal of the ground if the surface is rocky and if said surface must be broken up by means of cultivating, as well as destroy any plant debris that makes it difficult to travel on the road, the grinding thereof being required, with the tractor unit traveling backwards in this. This cultivator-mixer unit incorporates the possibility of mixing with solid additives (cement or lime) or liquid additives (polymers or co-polymers) to improve the bearing features and to better conserve the wearing course over time.

In a practical embodiment, it is possible to incorporate a support structure for an uneven number of solid tires which, being intercommunicated and supported by a hydraulic or pneumatic device so that, when exerting the same pressure (by hydraulic or pneumatic means), the least compacted area of the ground becomes compacted and the area where there were previously potholes is compacted. This pressure can be changed at the operator's will. In one of the lines (either in the front or in the back), the formation will consist of an even number, and in the next line it will consist of an odd number, such that the entire surface of the road will be tramped in one pass. Each wheel will be attached to a swinging support that is attached to the chassis and pushed by the cylinder in the upper portion of the wheel, where all the cylinders will be attached to one another by hydraulic connections to an accumulator-regulator where the pressure of the fluid, which will be a hydraulic fluid or pressurized air, will be modulated to exert more or less pressure on the ground. The chassis of said compactor structure will be coupled to the implement carrying plate located behind the rear shaft of the machine or behind the compactor roller, and the latter will be coupled to the grader machine in a modular manner in a possible particular interpretation.

In a particular embodiment, the invention incorporates a metering reservoir for solid additives (such as cement or lime), located above the cultivator with a system for metering that is proportional to the forward movement, with various lower discharge hatches for precise distribution in those areas in which it is needed and without any overlaps taking place. The hatches are operated by remote control, which can be hydraulic, pneumatic or electric, and with an indicator on a display in the driver's cab. It is located above the cultivator-mixer and can only be mounted if the machine has said unit.

Likewise, and for a version requiring a greater working capacity, an auxiliary motor providing more power to the cultivator for jobs so requiring it could be mounted.

In a particular version, the assembly forming the leveling central body and the compactor roller that is mounted behind the leveling central body, as well as the tank for storing the polymers, could subsequently incorporate a steering shaft with four tires covering the entire width of the leveling central body in parallel, so that the entire surface of the plot of land leveled by the leveling central body can therefore be tramped, and gravity compaction and the superficial smoothing of the plot of land, as well as surface sealing, can be achieved. The shaft could be formed by a central body, to which body there are attached four or more tires arranged parallel to one another, and which pivots hydraulically in the horizontal direction and aligned with the forward movement of the machine, so that the machine can tilt to the side and slopes can be made, and which pivots hydraulically in the vertical direction with respect to the ground for directing the subsequent alignment of the machine with respect to the direction of travel so that it can be more maneuverable.

The present invention will have optional electronic angle-measuring gauges mounted on the shafts, or electronic measuring gauges for measuring the angle at which each of the planes of the movable parts (coulter, movable parts, ripper, lateral inclination of the machine, etc.) are located with respect to the level of the ground, and a processor which calculates and compares the various angles with respect to the ground so that the position of the different parts with respect to the ground, the levels of the reservoirs, the forward movement speed, the real time metering of the supplied additive, both in square meters and cubic meters, and the state of the discharge hatches of the solids reservoir, are shown on a display in the driver's cab at all times and in real time.

In a particular invention and for small gardening tractor units that do not have any hydraulic system for moving the articulations, the hydraulic cylinders could be replaced with electric linear actuators.

The preceding description is all in accordance with the independent claim enclosed with the present specification and incorporated herein by reference. The different particular embodiments are illustrated in the dependent claims which are likewise incorporated herein by reference.

Throughout the description and the claims, the word "comprises" and variants thereof do not intend to exclude other technical features, additives, components or steps. For those skilled in the art, other objects, advantages and features of the invention will be deduced in part from the description and in part from putting the invention into practice. The following examples and drawings are provided by way of illustration and do not intend to restrict the present invention. Furthermore, the present invention covers all the possible combinations of particular and preferred embodiments herein indicated.

### Brief Description of the Drawings

A series of drawings that help to better understand the invention and that are expressly related to an embodiment of said invention presented as a non-limiting example thereof is very briefly described below.

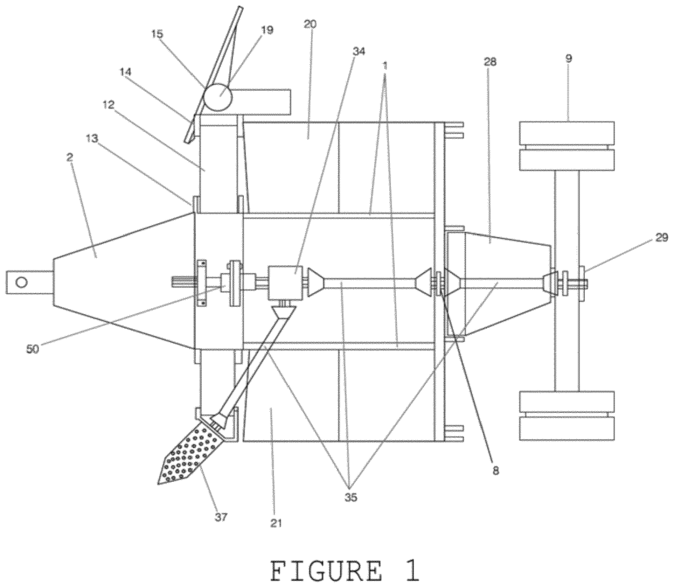

Figure 1 shows a schematic plan view of the machine object of the invention, including a sloper, a side cultivator and an intermediate floating coulter.

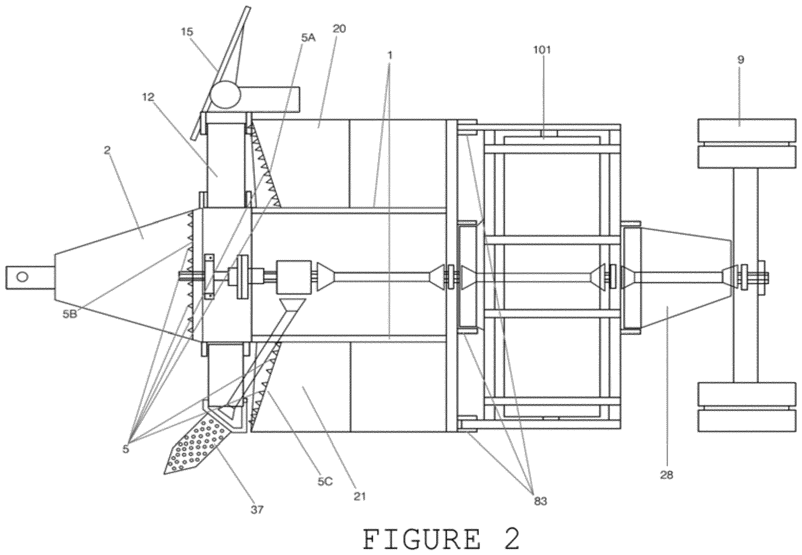

Figure 2 shows a schematic plan view of the machine of the invention, including a compactor roller.

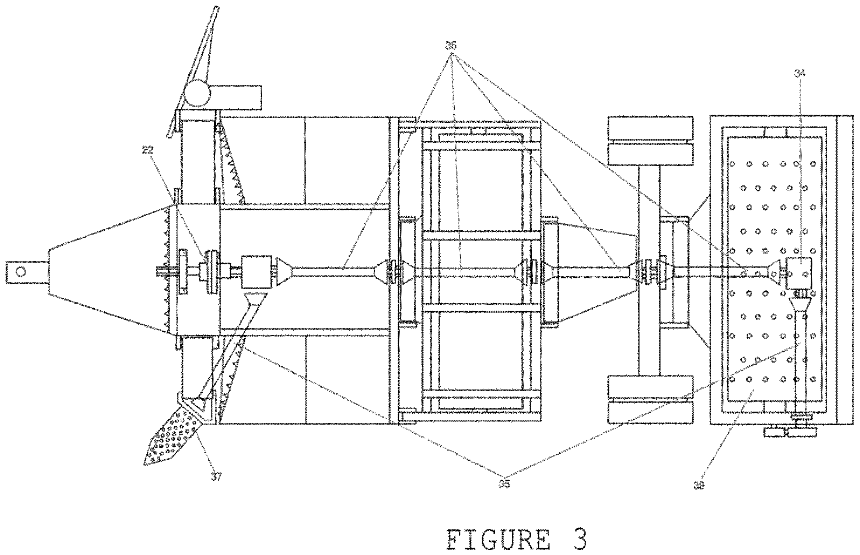

Figure 3 shows a schematic plan view of the machine of the invention, including a rear cultivator and roller.

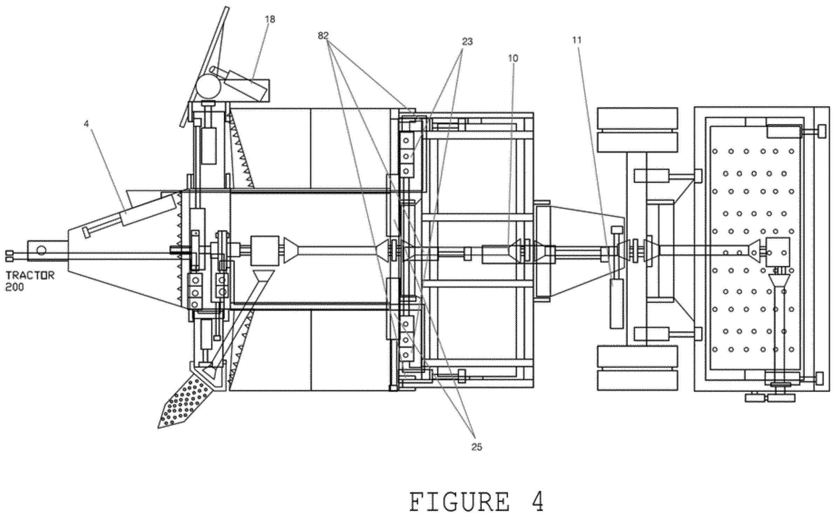

Figure 4 shows a schematic view of the hydraulic pressure circuit and cylinders.
Figure 5 shows a schematic plan view of the machine with a central trimmer.
Figure 6 shows a detailed view of section A-A of Figure 5.

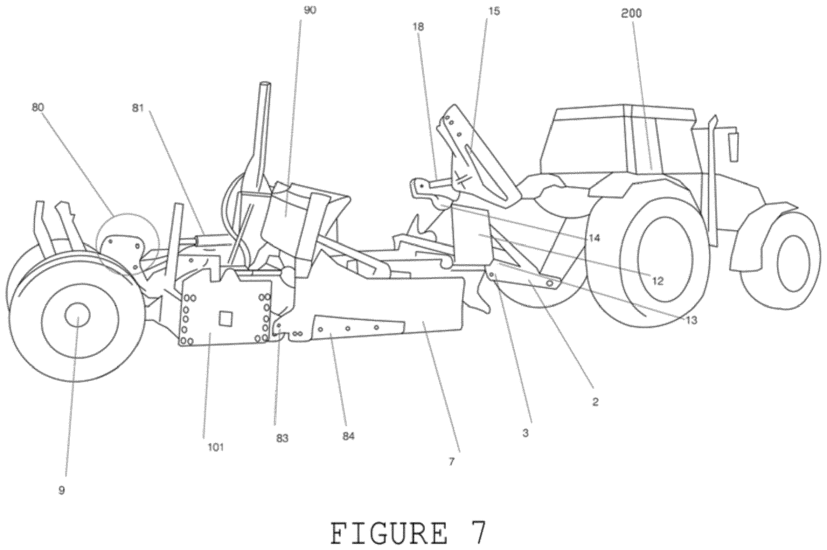

Figure 7 shows an overall view of the machine object of the invention.
Figure 8 shows three schematic views (8A, 8B, 8C) of the embodiment of the machine associated with a reservoir for water and/or additives for compacting soil, as well as those reservoirs for cement or lime.
Figure 9 shows a schematic view of a module with an intermediate floating coulter according to the description of the machine object of the present invention.
Figure 10 shows a schematic view of a trimmer module mounted on the side coulter of the machine object of the present invention.
Figure 11 shows a view of the trimmer of Figure 10 in the usage position.
Figure 12 shows a schematic plan elevational view of a five-spike scarifier module according to an embodiment of the present invention.
Figure 13 shows a schematic view of a support structure for solid tires as described according to the present invention.

### Description of a Detailed Embodiment of the Invention

The attached drawings show different non-limiting embodiments of the invention, including views of modules that represent different options and tools that can be incorporated in the machine object of the present invention. The following references are used in said drawings:

| **Reference** | **Description** |
|---|---|
| 100 | Machine object of the invention |
| 101 | Rear compactor roller |
| 200 | Tractor or tractor unit |
| 2 | Tractor-machine hitch |
| 201 | Lifting arms of the tractor |
| 4 | Lifting piston of the tractor |
| 5 | Scarifier-type front portion |
| 5a, 5c | Side sections of the scarifier-type front portion 5 |
| 5b | Central section of the scarifier-type front portion 5 |
| 6 | Rear leveling blade |
| 7 | Side walls |
| 84 | Wear parts in the side walls |
| 20, 21 | Containers formed by the walls 7 |
| 8 | Swinging support |
| 9 | Swinging shaft |
| 10 | First hydraulic cylinder of the swinging support 8 |
| 11 | Second hydraulic cylinder of the swinging support 8 |
| 81 | Liquid storage reservoir |
| 15 | Side blade |
| 12 | Side articulated arm of the side blade 15 |
| 13 | Horizontal shaft of side blade 15 |
| 14 | Horizontal bolt of the side blade 15 |
| 18 | Hydraulic piston of the side blade 15 |
| 19 | Vertical shaft of the side blade 15 |
| 85 | Visual mechanical markers |
| 37 | Side cultivating arm |
| 28 | Cylinder of the three-point hitches |
| 35 | Transmission shaft of the side trimmer |
| 39 | Rear cultivator or cultivating unit |
| 90 | Side extensions |
| 25 | Hydraulic cylinders |
| 82 | Cylinder of the compactor roller 101 |
| 83 | Shafts of the compactor roller 101 |
| 10 | Lifting cylinder of the compactor roller 101 |
| 80 | Parallelogram of the compactor roller 101 |
| 306 | Chassis of the side trimmer |
| 312 | Central cultivator |
| 313 | Piston of the central cultivator |
| 318 | Side cultivator |
| 302 | Telescopic swinging arm of the side cultivator |
| 303 | Male section of the arm 302 |
| 305 | Hydraulic cylinder of the arm 302 |
| 317 | Articulation of the side cultivator |
| 304 | Articulation cylinder of the side cultivator 318 |
| 311 | Height control roller of the side cultivator 318 |
| 320 | Reversible hoes |
| 317A | Cardan transmission of the side cultivator 318 |
| 319 | Rotor |
| 50 | Integral plates |

The present invention is generally formed by a leveling central body (LCB) constituting the main structure of the machine 100. In reference to the attached drawings, the machine 100 comprises a chassis 1 that is made up of two longitudinal beams which are attached to the tractor unit or tractor 200. In the present description, tractor and tractor unit are used interchangeably as synonyms.

The attachment between the machine 100 and the tractor 200 allows the chassis 1 to receive part of the weight of the tractor 200, improving penetration in a very hard and rocky ground by means of the following options:
a) By means of a hitch 2 which is attached to the lifting arms 201 of the tractor 200 itself; or
b) With a lifting piston 4 which is attached to a pivoting hitch 202 of the tractor 200.
c) Attaching a telescopic front steering hitch.

The machine 100 object of the present invention comprises a scarifier-type front portion 5 formed by three sections (5a, 5b, 5c) which can be curved or horizontal supports for fixing in said interchangeable scarifier-type tines. This scarifier-type front portion 5 allows low section scarification and leveling (i.e., equal to or less than 30 mm). The scarifier-type front portion 5 is arranged in an inverted delta shape with respect to the forward movement direction and has interchangeable spikes or tines of tungsten carbide (cemented carbide) or another material of equivalent strength and hardness at the lower end thereof. The central section of the scarifier-type front portion can be fixed with respect to the chassis 1 or adjustable in height. The angle of incidence with respect to the ground is comprised between 30° and 60°, preferably 45°.

The scarifier-type front portion 5 only turns over the high points, whether they are hard or very hard, without lifting up large blocks of rock, thereby providing fine material suitable for leveling the wearing course.

The material turned over from high points of the road by the scarifier-type front portion 5 converges in a rear leveling blade 6 arranged after the scarifier-type front portion 5. This leveling blade 6 has a certain capacity for storing and transporting dirt or gravel aggregate, given that it is laterally demarcated by two walls 7, which are metal parts, forming containers (20, 21), one on each side of the machine 100, and driving the aggregates (dirt or gravel aggregate) such that previously scarified material cannot spill over the sides.

Wear parts 84 are bolt-mounted to the side plates 7, these wear parts 84 being replaced whenever the bolt-mounted coulter arranged on the leveling blade 6 is switched, therefore no material spills over the side lower portion of the machine 100.

The rear leveling blade 6 is adjustable in height and laterally by means of a swinging support 8 and is attached to the rear shaft 9. The support 8 is operated by means of a first hydraulic cylinder 10. The adjustment of the lateral inclination is determined by a second hydraulic cylinder 11 arranged between the support 8 and the rear shaft 9, where side slopes of up to 20% can be determined on each side of the machine 100.

These elements (chassis 1, scarifier-type front portion 5, rear leveling blade 6 and side walls 7) form the basic structure of the machine 100, which shall hereinafter be referred to as leveling central body (LCB), which is an assembly acting like a container that is open in the front and enclosed on the sides and in the back in the direction of travel, and it allows scarified materials to be driven in order to be deposited in potholes in roads, leveling their surface, without said material spilling over the sides as occurs today.

Different modular solutions constituting the different practical embodiments of the machine 100 object of the present invention are established based on the structure of this LCB (1, 5, 6, 7).

Nevertheless, in a particular embodiment of the invention, in which the machine 100 is towed by tractors 200 having very little power, the scarifier-type front portion 5 could consist of a perforated bar where the interchangeable spikes are inserted, so the aforementioned containers (20, 21) will not be required. The two side sections (5a, 5c) of the scarifier-type front portion 5 will be fixed and attached to the side walls 7 and to the central chassis 1, whereas the front section (5b) of the scarifier 5 is fixed or adjustable in height given that, when the coulter of the rear leveling blade 6 is exposed to wear and in order for it to be on the same plane as the interchangeable spikes of the scarifier-type front portion 5, the height of said central section of the scarifier-type front portion 5 must be adjusted.

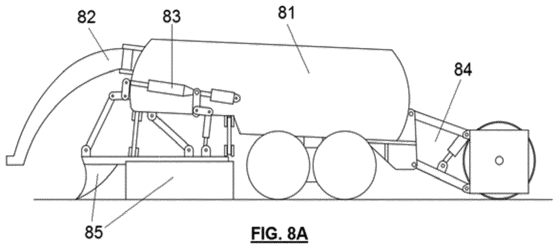

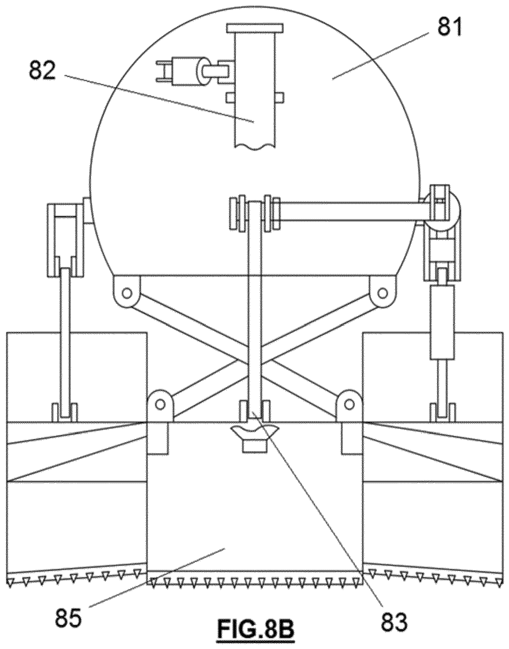

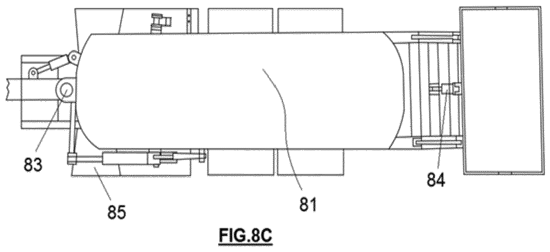

The containers (20, 21) together with the remaining elements can allow being ballasted in their closed interior. This additional weight facilitates penetration of the scarifier 5, particularly when it only falls on one of the scarifier-type blades (5a, 5b, 5c), as it is not necessary to scarify the entire cross section of the road at a specific point, obtaining maximum penetration in hard or very hard soil, including a rock formation. The containers (20, 21) therefore make the machine robust and sturdy. In the embodiment with a mixer, shown in Figure 8, said side containers (20, 21) are integrated in a liquid storage reservoir 81.

In a particular embodiment, the machine comprises at least one side blade 15 for forming banks, cleaning side ditches, or even allowing the excavation and formation of said ditches. To that end, with respect to each side blade 15, at least one is naturally arranged on the right side or on the left side of the machine 100, at the user's will, if deemed appropriate, i.e., there can be a side blade 15 on the right side, on the left side or on both sides. Nevertheless, it must be taken into account that if any module other than those described below is mounted on the left side, the side blade 15 naturally could only be mounted on the right side.

The side blade 15 is integrally attached to a side articulated arm 12 pivoting about a horizontal shaft 13 with respect to the chassis 1 and aligned with respect to the direction of travel. The side blade 15 comprises a bolt-mounted coulter to facilitate replacement thereof in case of wear.

This configuration allows the side blade 15 to swing, being positioned on the machine 100 in the standby position or else dropping downwards with respect to the direction of travel, being able to drop below the horizontal of the chassis 1, and attached by means of a horizontal bolt 14 aligned with the direction of travel, where it allows the side blade 15 to be positioned, with respect to the horizontal of the ground, at +45° degrees with the coulter in front for collecting in the center of the machine 100, and at -45° degrees for forming banks or cleaning up side ditches, or even allowing the excavation and formation of said ditches.

If said side blade 15 is aligned with respect to the direction of travel, and if the gradient of the ground and the incidence of the blade by means of a hydraulic piston 18 acting on the side blade 15 and pivoting about the vertical shaft 19 with respect to the direction of travel is at +60°, the material located to the side of the machine on the right side will converge in the center of the container (20, 21). This feature is very advantageous in the dirt and/or gravel aggregate roads in this driving area and due to vehicles constantly traveling over it, the fine materials gradually settle on the sides of the road, so the practice of driving them to the center is extremely advantageous given that it supplies fine materials to the center of the driving area and clears the lateral edge of the road, favoring later drainage during the rainy season.

Likewise, if the hydraulic piston 18 of the side blade 15 is drawn in, the material will be pushed away from the machine 100, thereby very efficiently cleaning up the edges of the road, pushing away rocks and elements complicating transit. The side blade 15 could have two bolt-mountable extensions that will have a longer reach and width, or which is even hydraulically articulated and allows V-type ditches or larger banks.

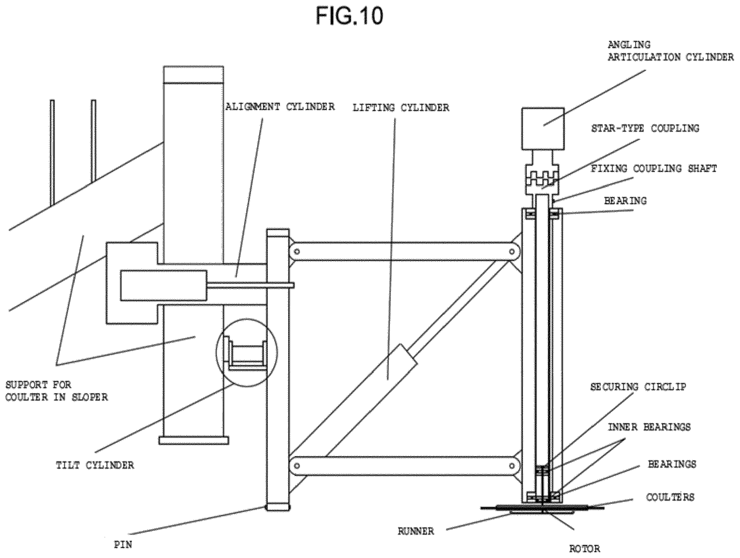

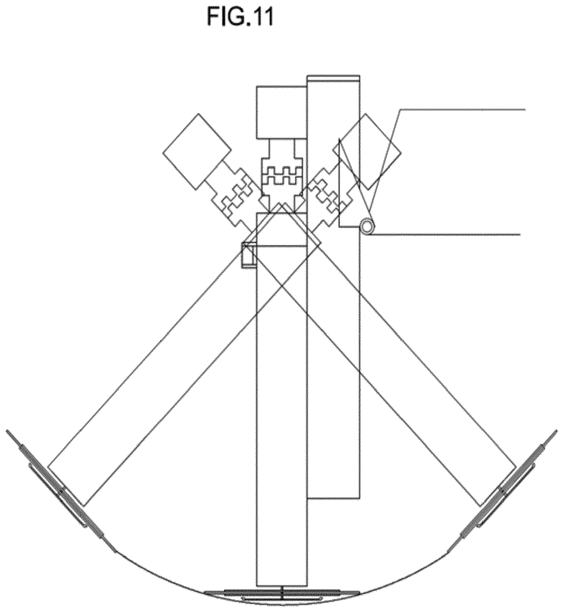

In a particular embodiment, the side blade 15 could be associated with a front trimming arm respect to the side blade 15 (shown in detail in Figures 10 and 11). The trimming arm is a hydraulically operated articulated trimming arm pivoting about three axes, one in the horizontal direction with respect to the side blade 15, another one with respect to the right or left alignment with respect to the vertical shaft of the hydraulic arm and a third axis for defining the height with respect to the coulter of the side arm. This arm will bear a trimmer that will be mounted on the same plane as the coulter of the side arm, but it could pivot by more or less 35° and it will support a shaft that transmits the power of a hydraulic motor to two plates, where will be housed four cutting coulters which when rotating by means of centrifugal force, will cut the grass and bushes that are on the ground, shooting the debris out, so this debris does not hinder the task of leveling the road given that if they are mixed with the aggregates at the ends of the road and driven to the center, the process is much more difficult. The shaft will be driven in the upper portion thereof by a hydraulic or electric motor in gardening equipment, attached to the casing by means of the support between the motor and the shaft will be an elastic attachment absorbing vibrations. The shaft will have on its lower side a freely rotating plate serving as a runner.

In a particular interpretation, a circular saw blade that allows cutting trees and bushes invading the vertical of the boundary of the road, making it difficult to travel thereon, could be screw-mounted.

Therefore in the embodiment of Figures 10-11, the machine 100 is able to simultaneously shred the underbrush located in the center and on the side of the road where they are not tramped by the wheels of vehicles, fixing potholes and grading the central driving surface as well as crushing the stones on the surface, cleaning up the lateral edge of the road with the blade located on the right side and subsequent compaction thereof by means of the rear roller 101.

All this will be visible in the visual mechanical markers 85 mounted close to the work area and providing visual reference points to the driver in order to comparatively interpret where the coulter is located.

The machine 100 has a side cultivating arm 37 having dual articulation mounted on the left side. The first segment is articulated on the chassis 1 in the horizontal direction and with respect to the forward movement, and the second segment is articulated in the same way on the first segment by the action of two hydraulic cylinders. This side cultivating arm 37 allows cultivating and defining side ditches where rocky materials are hard or very hard, hydraulically descending at the driver's will and being hydraulically adjustable, driven by a transmission shaft 35 which is articulated and attached by two cardan joints which draw the force from the gearbox 34 that is mounted behind section 5b, with respect to the direction of travel and is provided with two integral plates 50 with a fusible element.

It could occasionally be driven hydraulically with the same power installation as the side trimmer and a hydraulic selector switch selecting one function or the other.

This side cultivator 37 has mounted thereto helically arranged, interchangeable tungsten carbide tines, such when rotating such that they strike the ground from below, they all rotate together, forming a spiral bit which pushes the cultivated material forward and upward due to rotation, driving it to the wearing course where it will be deposited and will serve as a solid base material once it has been spread out.

Furthermore, it may have a rear cultivating and breaking unit 39 for breaking the rocks on the surface, or it may descend slightly from the horizontal of the ground to be defined if there was a rocky surface that had to disappear, and with the tractor unit traveling in reverse, it may also destroy, by means of the rear portion of said cultivator, pine trees or other trees located on the sides of the road, which make it difficult to travel on said road and require being shredded. This rear cultivator 39 draws force from the transmission shaft 35 which is coupled to the power take-off of the tractor.

To attach and suspend said cultivator 39, it will be attached by two lifting bars after the rear shaft 9 and a lifting cylinder. This rear cultivator 39 could have mounted thereto different types of striking tines depending on the materials to be shredded; likewise, it will be equipped with a rear door swinging on horizontal shaft and in the transverse direction with respect to forward movement, which will allow when lifted being able to access forest or tree cover for shredding and destruction. In a particular embodiment, the control device of this door could be controlled by a hydraulic cylinder. This cultivator could descend 25-30 centimeters and mix the cultivated materials, solid additives (lime or cement) or liquid additives such as polymers and co-polymers, and it could be associated with a lime or cement metering hopper in the upper portion thereof.

Side extensions 90 which are folded up on the grader machine can be mounted on the leveling central body (LCB) in order to convert it into an automated leveling blade controlled by a laser emitter-receiver device, which swing laterally to be deployed by means of two hydraulic cylinders 25 and connecting rods for facilitating the 180° rotation, and when they are extended, these side prolongations provide for an increase in width and the grading and leveling of stretches of land for agricultural use intended for gravity irrigation or grading industrial surfaces with a high degree of precision and minimal expertise by the operator. Said side extensions have anti-wear coulters screw-mounted onto their lower edge with a side also having screw-mounted coulters.

In a particular embodiment of the invention, the machine 100 comprises a rear compactor roller 101 articulated such that by pivoting about the shafts 83 due to the action of the cylinder 82, it is raised or lowered with respect to the vertical of the coulter, said cylinder 82 being withdrawn, the weight of the rear compactor roller 101 resting on the machine and fulfilling its ballasting purpose, or if the cylinder 82 pushes the roller 101 downwards, the entire weight of the machine will rest on the rear compactor roller 101, which leads to, when said roller passes over the road, either crushing the stones on the ground, or if the ground is solid, breaking the ground with the weight of the roller and the machine 100.

In a particular embodiment, the rear compactor roller 101 can be a vibrating roller by means of a hydraulic motor, and it optionally incorporates two sliding plates with antifriction parts for lifting and lowering the rear compactor roller 101 without changing the angle with respect to the LCB.

In another particular embodiment, the rear compactor roller 101 can be mounted between the rear portion of the machine 100 and the rear shaft 9, and then for lifting the machine in the rear portion, the lifting cylinder 10 will strike, from the upper portion rear of the machine 100 to the parallelogram part 80, which acts on the tie which in turn strikes the chassis joining the roller with the support 8 of the rear shaft 9, or when the roller is demounted, the machine 100 with the support 8 of the rear shaft 9 directly dispenses with the rear roller compactor 101, the hydraulic lifting cylinder 82 of the roller, the lifting parallelogram mechanism of the machine 80 and the tie between the parallelogram 80 and the rear shaft 9. Therefore, only the machine 100, the support 8 of the rear shaft and the rear shaft 9 itself are used.

This rear compactor roller 101 can be smooth for finishing roads intended for vehicles, or it can be a pad foot roller in order to spread out fine layers with the grader machine and compact those layers with the roller, firmly attaching them to others when the materials are plastic materials (for example clays); and it is required for building dikes and dams.

In another particular embodiment, the compactor roller 101 can be mounted behind the rear shaft and attached to same by two aligned bolts attached at the top of the chassis of the LCB by a double acting hydraulic cylinder that has two ball and socket joints, one at each end. When this cylinder is elongated, it results in the weight of the machine resting on it with the subsequent consequence of the ground being graded and the rocks on the surface being crushed or broken up. If the cylinder is contracted, the compactor roller 101 is lifted as it pivots about the shafts.

In another particular embodiment, the hydraulic cylinder will have an electrically controlled hydraulic valve which allows communicating, from the driver's cab, the entry of oil for the cylinder to move upwards, with the exit of oil for the cylinder to move downwards, such that it starts operating in floating mode and the compactor roller 101 compacts the ground with just its own weight, such that weight is not transferred from the machine 100 to the roller, and if there is any stone that is too thick to be pierced below the horizontal preestablished by the road, if the roller would not raise the coulter and create a higher point in the grade that is unwanted for the driver.

Both elements, i.e., the rear cultivator 39 and rear compactor roller 101, can be incorporated in the machine 100 separately or together.

All the movements made by the various articulations can be easily interpreted by adjustable mechanical markers 85 or electronic sensors which are all visible on the right side in a position that is comfortable for the driver, save those referring to the articulated cultivating arm 37 mounted on the left side. Said mechanical markers 85 help the driver by providing visual references.

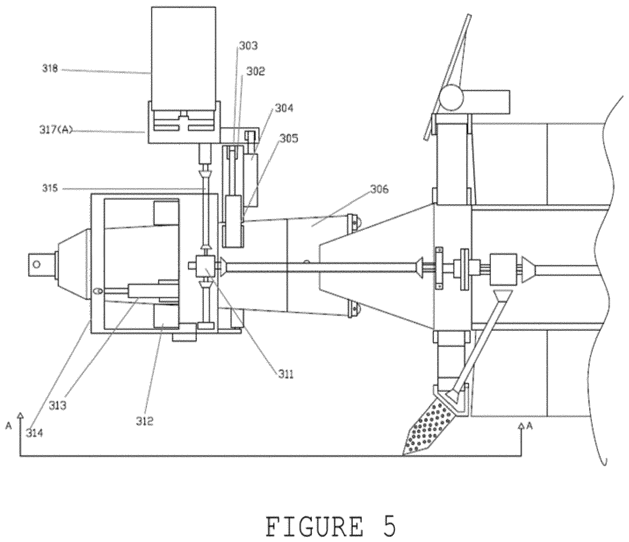

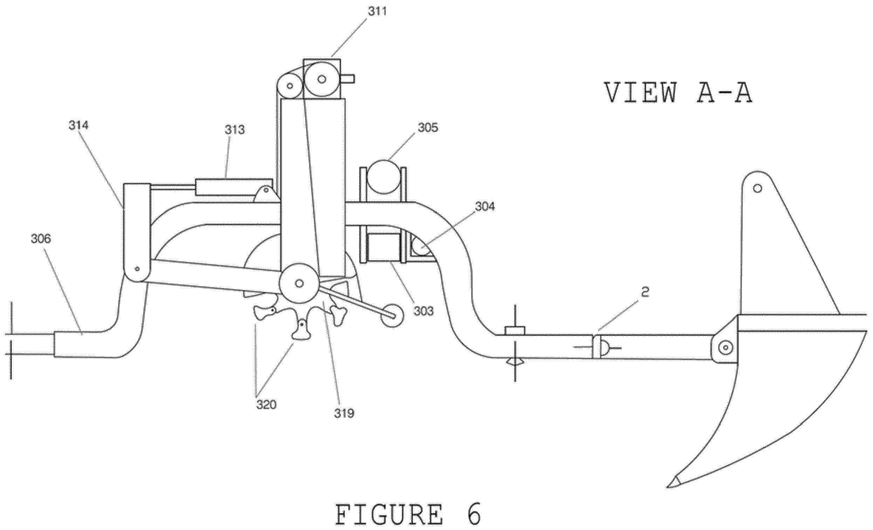

Optionally, as shown in Figures 5-6, the machine 100 is provided with angle-measuring gauges or electronic sensors mounted on the shafts and planes and a display in the driver's cab where the position of the different parts with respect to the ground is shown at all times and in real time.

In a particular embodiment, said grader machine 101 could be equipped in its front portion with a dual head trimming unit in a modular manner, said dual head trimming unit being located in front of the hitch 2, easily bolt-mounted thereto and prolonging the length forward. It consists of a chassis 306 and supports in the center and thereunder the cultivator central body 312 to which it is attached, and it is operated for lifting or lowering by means of the hydraulic piston 313. The side cultivator body 318 is attached to the chassis 306 by means of a telescopic swinging arm 302, where the latter is a male section profile of the telescopic arm 303, attaching them to both sections and in order to fulfill the function of being elongated and contracted at the operator's will there is a hydraulic extension cylinder 308.

The telescopic swinging arm 302 is lifted or lowered by means of the hydraulic lifting cylinder 305 attaching it to the chassis 306.

The side trimmer cultivator body 318 is attached to the male telescopic arm 303 through the part 317 which serves as an articulation and support, and also transmitting traction by means of two pairs of bevel pinions facing one another and imparting the movement regardless of the angle of the side cultivator body 318 with respect to the arm 303. This articulation movement is done by means of the hydraulic tilt cylinder 304. This side cultivator body could swing about part 317, descending onto the gradient of the ground -30° and being lifted up +110°.

Both the central cultivator body 312 and the side cultivator body 318 have a height control roller 311 that allows being adjusted so that the weight of the cultivator body can rest on it, and therefore the cutoff height of the reversible hoes 320 is always the same and very close to the ground, so they do not collide with the ground but rather can be adjusted with greater precision.

The direction of rotation of the reversible hoes 320 could be one or the other, interchangeably, according to the driver's will. The reversible hoes 320 are attached to the rotor 319 of the cultivating body by a fixing shaft screw, which allows the free rotation about same such that if they were to come across an obstacle such as a stone or a branch that could not be broken by hitting just once, the hoes can freely rotate about the shaft without damaging the assembly.

The driving force for propelling this cultivating unit will come from the power take-off of the tractor to a box and will be transmitted by means of a reduction gearbox 311 which will be located in a chassis on the cultivator central body 312. Said box will draw the driving force through the front portion and yield it to both sides, i.e. on the left side it yields it to a shaft integrally attached to a pulley and belt assembly driving the rotor 319 of the central cultivator, and the right side it yields it to a telescopic cardan-type transmission, attaching it to part 317A, thereby allow the transmission of the driving force regardless of the angle of the cultivator side head 318 with respect to the telescopic arm 303 supporting it. In the rear portion, it will yield the driving force which will move the cultivator side arm and the rear shredding and cultivating unit.

The reduction gearbox 311 will have in the front portion a system of integral plates 50 which are fixed with a fusible screw that will serve in case the driving force transmission system were to suffer overstraining at some point and as a safety measure. Said box will be of the type which takes on a direction of rotation and yields it interchangeably to both directions so that the cultivator heads rotate at the driver's will in one direction or the other.

In a particular embodiment, the LCB in the front portion will have a hitch referred to as a three-point hitch, where it is hitched to the lifting bars of the tractor and to the third central point; it could be articulated with respect to the horizontal shaft and be perpendicular to the direction of travel and the ground, pivoting by means of the cylinder 28 for the articulation between the front portion, made up of scarifier sections 5A, 5B and 5C and the side plates 7 and the rear leveling blade 6, said rear leveling blade 6 being equipped with a turret located in the upper portion thereof and in the center which will serve as a support for the cylinder 28 and as a base of the turret which serves as a support for the laser receiver. In the front portion it will have a hitch referred to as a three-point hitch where it is hitched to the lifting bars of the tractor and the third central point.

Likewise, in this particular embodiment the rear leveling blade 6 will have a screw-mountable second coulter where the screws are provided with a head that is concealed on the rear side given that a machine 100 could then be suspended from the lifting bars of the tractor and the third point and pushed back like a bulldozer.

Figure 8 shows an embodiment which includes means for metering out liquid additives for compacting soils, such that work which up until now required different machines, such as compactor rollers, wagons and leveling stabilizers, can be done with a single machine. To that end, the machine 100 incorporates a tank 81 or reservoir for water and/or additives in solution with a connection 82 for supplying a supply tank (not shown in the attached drawings) when the machine 100 is cultivating the road at a very low speed. In a particular embodiment, the capacity of this reservoir 81 allows for applying treatment to about 1500 m².

In this embodiment, the front articulation system 83 and articulation system of the rear shaft 84 allows the tractor-machine assembly, which can reach a length of about 12.3 meters (in a non-limiting manner), to be steered and maneuvered, which allows the cutting tools to be very precisely placed at the edges of the road. It is therefore possible to stabilize and improve gardens, bicycle lanes and paths in natural parks, where the layout is usually quite winding.

Therefore, with the cultivating unit 85 descending from the horizontal of the ground, liquid aggregates in solution (polymers) or solid aggregates (cement or lime) can be mixed in order to improve the bearing capacities of the soil by eliminating mud and dust. Optionally, there is included an electronic system made up of an electronic processor controlling the parameters of width (fixed), depth (variable), speed of travel at the time of application (variable) and amount of additive added per unit of time. These parameters are detected by sensors, a processor calculates the relationship between them and dumps the data on a display where they are shown in the form of additive concentration per m², per m³ and where alarms can be adjusted. The driver therefore has the metering per unit of volume treated in real time under control. Furthermore, adjustments can be made on the go, thereby providing more or less resistance to a specific area of a road. Therefore, the breaking unit. In the same manner, and also optionally, there is included a GPS module which contemplates where the machine 100 has been so that overlapping application of the aggregate in successive passes, i.e., applying it on what has already been applied, does not take place. Accordingly, the electronic processor will order electrically-operated valves to shut off the flow in the metering nozzles passing over the already treated surface, showing the treated surface on a mobile display that can be accessed in the driver's cab in a different color.

In a particular interpretation, the lifting and descending movements of the different parts which are performed by articulation means will be done by means of sliding systems, such that the lifting and descending movements are performed by means of telescopic systems. The lifting system for lifting the roller with the main body of the grader, the lifting system for lifting the steerable rear shaft with the roller and the lifting system for lifting the cultivator-mixer with the steerable rear shaft is carried out by means of a system of sliding plates that can be adjusted with respect to one another, which move up and down and having between one another adjustable synthetic antifriction parts. This system is operated by means of hydraulic cylinders. The purpose of this system is to reduce the total length of the machine 100 so that the entire assembly can fit in a 40" container and so that the angles between the leveling body and the roller, between the roller and the steerable shaft and between the steerable shaft and the cultivating and mixing unit do not change.

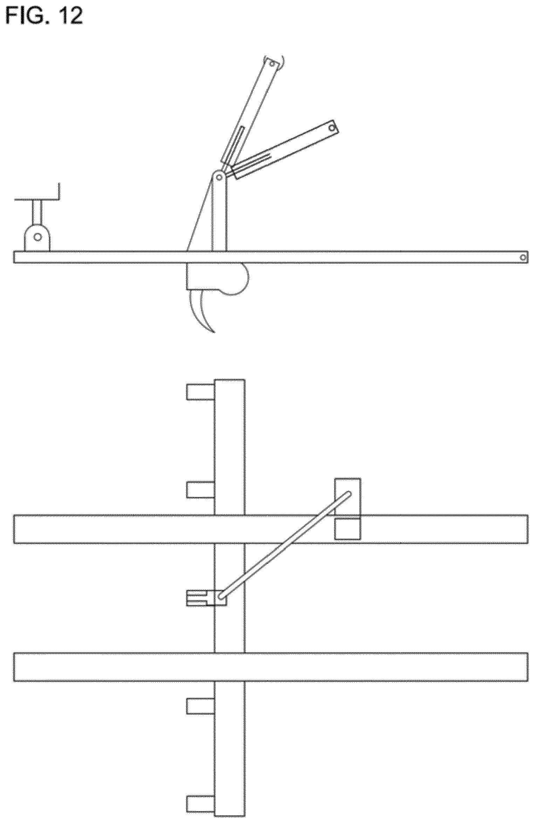

In an additional particular embodiment shown in Figure 12, it is possible to incorporate a second five-tooth scarifier wherein the teeth are bolt-mountable and which, attached to a chassis, swings about two bolts, moving up and down by means of a hydraulic piston and serving to unpack the road or surface to be stabilized, such that the layer to be stabilized is broken up as much as possible and has no obstacles on the surface. Stabilization is performed by means of the action of a cultivator-mixer and the supply of solid or liquids additives.

The second additional scarifier therefore serves for turning over the subsoil of the road at a depth of between 20 and 30 centimeters, hydraulically operated upwards and downwards at the driver's will. This additional scarifier is primarily used for digging up the plot of land before being cultivated and before the solid or liquid aggregates that allow stabilizing the plot of land are added. Therefore, when the cultivating-mixing unit is going to be used, one can be certain that there will not be any solid formation complicating the work, and the work will therefore be done faster than with the machines described in the state of the art.

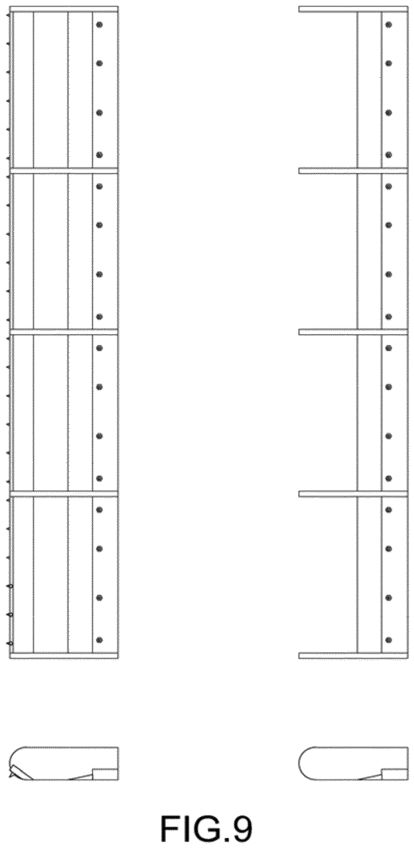

In another particular embodiment, the rear leveling blade 6 comprises an intermediate floating coulter (see Figure 9) made of wear and abrasion resistant steel which is bolt-mounted using concealed head screws.

The floating coulter drives the moved material so that it will fall into potholes and cause the coarse materials to settle and so that it will subsequently be passed over again with the rear leveling blade 6. The efficacy and correct settling of medium-sized stones in potholes is thereby increased by optimal mixing with fine materials, and the material supplied in the potholes solidifies better. The intermediate floating coulter can be lifted hydraulically at the driver's will when deemed appropriate. This intermediate floating coulter may also be associated with a line of spikes in the front portion for driving stones between said spikes, and the stones more readily fall and settle into the depressions and potholes, allowing fine materials to get out so that they can be made to settle using the intermediate coulter, therefore being even more effective.

In another practical embodiment, the intermediate floating coulter is replaced with V-shaped rakes arranged in a floating position and converging in the center, driving to that region medium-sized stones that were moved by the front tines. These stones driven by the V-shaped rakes are broken up by the crushing mill, located in the central rear portion thereof and moved by the power take-off of the tractor, and then converts them into fine gravel (less than 30 mm in diameter) falling into the leveling container and settling on the ground, which is very useful for improving the wearing course. They are located between the scarifier-type front spikes and the rear coulter and cannot be used at the same time as the intermediate floating coulter. The assembly formed by the V-shaped rakes and the crushing mill is particularly designed for being attached through a chassis and being located in the center of the LCB, but in another option they could be mounted behind the rear shaft provided that the machine is not towing cultivator-mixer, being incompatible with same.

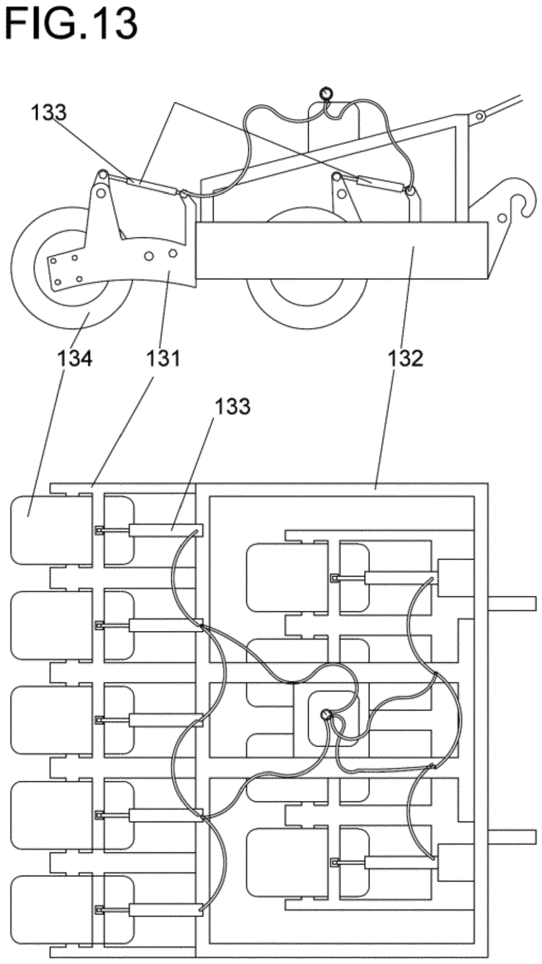

Finally, Figure 13 shows a support structure for an uneven number of intercommunicated solid tires, being supported by a hydraulic or pneumatic device so that, by exerting the same pressure (by hydraulic or pneumatic means), further compaction occurs where the ground is less compacted, and areas where there used to be potholes are thereby compacted. This pressure could be changed at the operator's will. In one of the lines (either in the front or in the back), the formation will consist of an even number, and in the next line it will consist of an odd number, such that the entire surface of the road will be tramped in one pass. Each wheel will be attached to a swinging support 131 that is attached to the chassis 132 and pushed by the cylinder 133 in the upper portion of the wheel 134, where all the cylinders will be attached to one another by hydraulic connections to an accumulator-regulator where the pressure of the fluid, which will be a hydraulic fluid or pressurized air, will be modulated to exert more or less pressure on the ground. The chassis of said compactor structure will be coupled to the implement carrying plate located behind the rear shaft of the machine or behind the compactor roller, and the latter will be coupled to the grader machine in a modular manner in a possible particular interpretation.

## Claims

1. A towable machine (100) for leveling ground and roads which can be towed by means of a tractor (200) or tractor unit, **characterized in that** it comprises a chassis (1) attached to the tractor unit (200), wherein said chassis (1) supports a scarifier-type front portion (5) that directs the scarified material from high points of the road or plot of land to be leveled to a leveling blade (6), said material accumulating in a container (20, 21) demarcated by side walls (7); and wherein the scarifier-type front portion (5) is formed by three scarifier-type blades (5a, 5b, 5c), the two side sections (5a, 5c) of which are arranged in a delta shape with respect to the forward movement direction, and wherein the central section (5b) is ahead of said side sections (5a, 5b).

2. The machine (100) according to claim 1, wherein the scarifier-type front portion (5) comprises a plurality of interchangeable and demountable spikes or tines arranged in the lower portion of the scarifier-type blades (5a, 5b, 5c) or inserted in a fixed bar integrally attached between the side walls (7).

3. The machine (100) according to any of the preceding claims, wherein the chassis (1) that is made up of two longitudinal beams that are attached to the tractor unit or tractor (200) by means of a hitch (2) which is attached to the lifting arms (201) of the tractor (200) itself, or by means of a front lifting piston (4) which is attached to the pivoting hitch (202) of the tractor (200).

4. The machine (100) according to any of the preceding claims, comprising a hydraulically actuated hydraulic front steering hitch which will be mounted on a vertical axis with respect to the ground and will be hydraulically operated to rotate left or right.

5. The machine (100) according to claim 1, wherein the rear leveling blade (6) is adjustable in height and laterally by means of a swinging support (8) that is attached to the rear shaft (9) which is operated by means of a first hydraulic cylinder (10), whereas the adjustment of the lateral inclination is determined by a second hydraulic cylinder (11) arranged between the swinging support (8) and the rear shaft (9); and wherein it further comprises at least one side blade (15) integrally attached to a side articulated arm (12) pivoting about a horizontal shaft (13) with respect to the chassis (1) and aligned with respect to the direction of travel.

6. The machine (100) according to any of claims 1 to 2, comprising a rear compactor roller (101).

7. The machine (100) according to any of claims 1 to 3, comprising a cultivator (102) mounted behind the rear shaft (9).

8. The machine (100) according to any of the preceding claims, wherein the swinging side blade (15) being positioned on the machine (100) in the standby position, or else dropping downwards with respect to the direction of travel, being able to drop below the horizontal of the chassis (1), where it can be adjusted by means of a horizontal bolt (14) aligned with the direction of travel and another vertical one with respect to the ground.

9. The machine (100) according to any of the preceding claims, comprising a side cultivating arm (37) having dual articulations arranged at about 45° with respect to the horizontal defined by the direction of travel.

10. The machine (100) according to any of the preceding claims, having side extensions (90) that are folded over the body of the machine (100) when the machine is used for the main purpose of going over and compacting roads, or they swing about two horizontal shafts (26) and in the direction of travel by means of two hydraulic cylinders (25) and the corresponding connecting rods (27) making the 180° rotation from the standby position easier.

11. The machine (100) according to any of the preceding claims, automated by means of a laser emitter-receiver and an electrically-operated valve acting on the lifting cylinder (10) of the rear shaft (9).

12. The machine (100) according to any of the preceding claims, comprising a removable front section bolt-mounted to the hitch (2) where a central trimming body (312) and a side trimming body (318) mounted on a swinging arm (308) and telescopic arm (303) hydraulically adjusted in height by means of pistons (305, 304, 308) are integrated.

13. The machine (100) according to any of the preceding claims, comprising an auxiliary diesel motor connected with a transmission shaft (35).

14. The machine (100) according to any of the preceding claims, which is suspended from the lifting bars of the tractor and the third point and can be articulated with respect to the horizontal shaft and be perpendicular to the direction of travel and the ground, pivotable by means of a cylinder (28) for the articulation between the front portion, made up of scarifier-type sections (5A, 5B and 5C) and side plates (7) and the leveling blade (6), said blade (6) being equipped with a turret located in its upper portion and in the center which will serve as a support for the cylinder (28) and as a base of the turret which serves as a support for a laser receiver.

15. The machine (100) according to any of the preceding claims, wherein the lifting and descending movements of the different parts can be performed by articulation means or by means of sliding systems, such that the lifting and descending movements are performed by means of telescopic systems.

16. The towable machine (100) according to claim 1, comprising means configured for metering out additives and liquids (81, 82, 83, 84, 85) to improve the wearing course.

17. The machine (100) according to any of claims 1 to 4, comprising angle-measuring gauges mounted on the shafts and a display in the driver's cab where the position of the different parts with respect to the ground and the grade to be defined can be seen in real time.

18. The machine (100) according to claim 1, wherein in the rear shaft (9) the wheels are driven by means of electric motors which are attached to reducers through gears and bear the tires, driving the grader, speed could be modulated by means of an electronic rotation reading device in the wheel of the tractor unit and synchronizing it with same or providing a rotation reading device on the shaft of the trailer and another one on a drive wheel of the tractor unit and when the ratio of rotation changes, increasing the wheel of the tractor unit with respect to that of the wheel of the grader automatically and in the order provided by the processor which takes these parameters into account, the two gear motors pushing trailer coming into action.

19. The machine (100) according to any of the preceding claims, comprising an intermediate floating coulter which is secured with chains in the front and overhead, can be hydraulically lifted at the driver's will.

20. The machine (100) according to claim 19, wherein the intermediate floating coulter has a line of spikes associated with same in the front portion.

21. The machine (100) according to any of the preceding claims, comprising V-shaped rakes arranged in a floating position and converging in the center, and wherein it further comprises a crushing mill, located in the central rear portion thereof and moved by the power take-off of the tractor.

22. The machine (100) according to any of the preceding claims, comprising a five-spike scarifier configured for turning over the subsoil of the road at a depth of 20 to 30 centimeters, hydraulically operated upwards and downwards at the driver's will.

23. The machine (100) according to any of the preceding claims, comprising a cultivating arm for ditches in hard soils, located on the left side of the machine, the articulations thereof being controlled hydraulically, said arm cultivating hard or very hard materials to form ditches.

24. The machine (100) according to any of the preceding claims, comprising a hydraulically controlled side coulter pivoting about two shafts in the longitudinal direction with respect to the direction of travel and one in the vertical direction and perpendicular to the ground, thereby being able to change the angles of incidence with the ground with respect to the three shafts.

25. The machine (100) according to claim 24, wherein the side coulter comprises bolt-mountable extensions for greater reach or for bearing a hydraulically articulated extension, referred to as an articulated extension which forms larger banks or V-type ditches.

26. The machine (100) according to claims 23 to 24, incorporating a herbicide fumigation equipment, consisting of a small reservoir integrated in any high area of the machine, a pump with a pressure limiting valve driven by the cardan shaft, a flow valve and one or more metering nozzles.

27. The machine (100) according to any of claims 23 to 24, comprising on the side coulter a front trimming arm cutting and shooting out the plant debris located along the outer edge of the road, clearing from the wearing course any plant debris found on the border that hinders leveling when mixed with the aggregate; wherein said trimming arm pivots hydraulically in inclination, height and alignment with respect to the coulter of the side arm and has a disc to which there are attached several cutting and crushing chains or coulters and which rotates outwardly and in the direction of rotation more or less parallel to the plane of the ground to which it is proximal; and wherein the arm is adjustable from the driver's cab and is moved by a hydraulic motor located in the upper portion thereof, such that it is floating and adapts to the ground by means of a lower plate rotating freely above the ground.

28. The machine (100) according to claim 27, wherein the coulter comprises a ditch compacting-forming polymer mixing arm, which is associated with and bolt-mounted to the hydraulically operated right side arm.

29. The machine (100) according to any of the preceding claims, comprising a cultivator unit consisting of a cultivating unit or cultivating wheel; a scraping-forming runner and a compacting wheel behind the cultivating wheel and the scraping-forming runner.

30. The machine (100) according to any of the preceding claims, wherein the front portion thereof incorporates at least one central and side modular trimmer, consisting of two modules, i.e., a central module and another side module mounted on a chassis swinging about 120°.

31. The machine (100) according to the preceding claims, comprising a tank or reservoir with a liftable hitch for suspending a vibrating or non-vibrating compactor roller, or a cultivating-additive mixing unit, with the corresponding metering systems, and in this case and for this purpose there will be a shaft articulated by cardan-type constant-velocity joints from the tractor giving it power.

32. The machine (100) according to claim 31, wherein the hydraulically liftable hitch will be mounted on an articulated support by means of a hydraulic cylinder with respect to the longitudinal axis of the machine, to make the assembly formed by the grader with the integrated reservoir and implements suspended in the rear portion thereof more maneuverable.

33. The machine (100) according to any of the preceding claims, wherein the hydraulic system for moving the articulations is replaced with electric linear actuators.

34. The machine (100) according to any of the preceding claims, a support structure for solid tires where each wheel is attached to a swinging support (131) and is attached to a chassis (132) and pushed by a cylinder (133) in the upper portion of the wheel (134).
